(19) **Europäisches Patentamt**
**European Patent Office**
**Office européen des brevets**

(11) **EP 2 161 235 B1**

(12) **EUROPEAN PATENT SPECIFICATION**

(45) Date of publication and mention
of the grant of the patent:
**14.01.2015 Bulletin 2015/03**

(51) Int Cl.:
**B66F 7/06** *(2006.01)*   **G06K 7/10** *(2006.01)*
**B66F 7/08** *(2006.01)*

(21) Application number: **09160662.4**

(22) Date of filing: **19.05.2009**

(54) **Lifting device, particularly for lifting wheels of vehicles and the like, for wheel balancing and tire removing machines**

Hebevorrichtung, insbesondere zum Anheben von Fahrzeugreifen und dergleichen, zum Radausgleich und Reifenentfernungsmaschinen

Dispositif de levage, en particulier pour lever les roues de véhicules et similaires, pour l'équilibrage de roues et machines de retrait des pneus

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **03.09.2008 IT MI20081577**

(43) Date of publication of application:
**10.03.2010 Bulletin 2010/10**

(73) Proprietor: **CEMB S.p.A.**
**23826 Mandello del Lario (LC) (IT)**

(72) Inventor: **Buzzi, Carlo**
**23826, MANDELLO DEL LARIO LC (IT)**

(74) Representative: **Modiano, Micaela Nadia**
**Modiano & Partners (IT)**
**Via Meravigli, 16**
**20123 Milano (IT)**

(56) References cited:
**WO-A-86/06054**      **DE-U1- 20 316 905**
**FR-A- 1 026 383**    **FR-A- 1 343 743**
**GB-A- 846 161**      **US-A- 2 480 916**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to a lifting device, particularly for lifting wheels of vehicles and the like, for wheel balancing and tire removing machines.

It is common practice, in the field of vehicle repair shops, to use wheel balancing machines on which it is necessary to mount the wheel to be balanced by inserting a shaft, arranged at a distance from the ground that ranges on average from 700 mm to 800 mm, in the hole of such wheel.

Moreover, during the mounting of the wheel on the balancing machine, the wheel is centered on the above cited shaft by means of a conical device that acts on the central hole.

This known method for mounting the wheel on a balancing machine suffers a number of drawbacks. Among these, one must include the fact that the wheel, which can weigh up to 70 kg, is generally lifted manually by the operator, with an obvious effort for the operator and with a consequent risk of injury.

Another drawback of this known mounting method consists in that during the centering steps the conical device, on which the wheel is mounted, is subjected to a considerable vertical stress that is due substantially to the weight of the wheel proper and this can easily compromise the perfect centering of the wheel on the balancing machine and therefore damage the quality of the measurement significantly.

In order to obviate these drawbacks, lifting devices are commercially available which, however, suffer considerable problems that make their use scarcely practical.

In particular, it is usually very difficult to bring the wheel to the exact centering position while bearing the weight of such wheel; pneumatic systems of the elastic type are in fact known which partially avoid the need to position the wheel exactly in terms of height.

In this manner it is possible to allow a relative elasticity to the system, so that the operator can easily fit the wheel on the conical device of the balancing machine.

However, these systems do not compensate exactly for the weight of the wheel over the entire stroke of the lifting device and therefore make it difficult to use, requiring a calibration thereof that depends on the weight of the wheel.

The same problems can also be observed in machines that are similar to wheel balancing machines. One example is constituted by tire removing machines, which require a step for positioning and centering the wheel in order to allow correct use of the machine.

GB 846,161 discloses a lifting device according to the preamble of the claim 1.

The aim of the present invention is to eliminate the drawbacks cited above by providing a lifting device, particularly for lifting wheels of vehicles and the like, for wheel balancing and tire removing machines, which allows to compensate automatically for the weight of the wheel over the entire stroke of such lifting unit, minimizing the work performed by the operator.

Within this aim, an object of the present invention is to provide a lifting device that is simultaneously inexpensive, compact in size and simple to use.

This aim, as well as these and other objects that will become better apparent hereinafter, are achieved by a lifting device, particularly for lifting wheels of vehicles and the like, as defined in claim 1.

Further characteristics and advantages of the present invention will become apparent from the description of a preferred but not exclusive embodiment of a lifting device, particularly for lifting wheels of vehicles and the like, for wheel balancing and tire removing machines, according to the invention, illustrated by way of non-limiting example in the accompanying drawings, wherein:

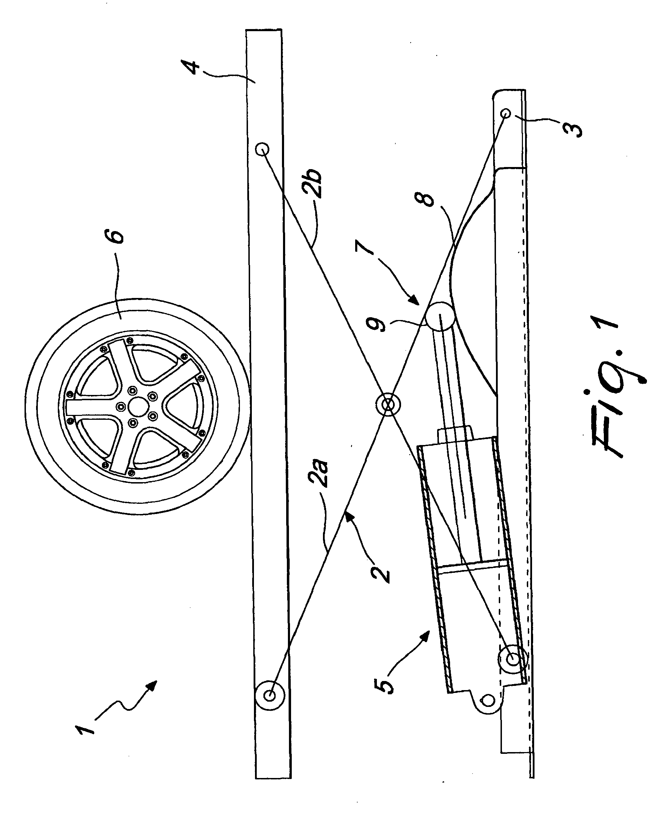

Figure 1 is a side elevation view of an embodiment of a lifting device, particularly for lifting wheels of vehicles and the like, for wheel balancing and tire removing machines, according to the present invention;

Figure 2 is a side elevation view of a detail of the lifting device shown in Figure 1;

Figure 3 is a schematic view of the force involved during the operation of the lifting device shown in Figure 1.

With reference to the figures, a lifting device, particularly for lifting wheels of vehicles and the like, for wheel balancing and tire removing machines, generally designated by the reference numeral 1, comprises a scissor-like frame 2, which is interposed between at least two flat and mutually parallel elements 3 and 4 for their mutual translational motion as a consequence of the action of motor means 5 that are functionally associated with the scissor-like frame 2.

More precisely, the two elements 3 and 4 are arranged in a horizontal position and respectively define the lower base of the lifting device 1 and the resting surface thereof on which a wheel 6 or any other object to be lifted is to be rested.

As regards the scissor-like frame 2, it is constituted by two rods 2a and 2b, which are hinged to each other so as to form an X-like shape and are hinged at one of their ends respectively to the lower base 3 or to the resting surface 4.

The remaining end of the two rods 2a and 2b is also functionally connected to the lower base 3 or to the resting surface 4, providing a carriage-like coupling so as to allow the scissor-like frame 2 to open or close as a consequence of the action of the motor means 5.

According to the invention, cam-type profiled means 7 are provided that can be engaged functionally with the motor means 5 for dynamic and static balancing between the thrust force generated by the motor means 5 and the resisting force of the scissor-like frame 2 in addition to the weight of the object to be lifted in all the operating positions of the lifting device.

More precisely, the motor means 5 comprise at least one pneumatic actuator, which can be pivoted to one of the two elements 3 and 4 with the movable element that can engage functionally the cam-type profiled means 7 and the scissor-like frame 2.

The pneumatic actuator works according to the known rule of adiabatic expansion of the thermodynamics:

$$P * V = \text{const} \qquad\qquad (1)$$

where P and V are respectively the pressure and the volume of the air contained in the cylinder of the actuator.

Advantageously, the means 7 comprise a body 8 that has a cam-type profile and is arranged between the lower base 3 and the rod 2a so that at least one bearing 9, associated with the movable element of the pneumatic actuator, can slide in contact with the outer profile of the cam-type profiled body 8 and simultaneously with a second profile defined by the rod 2a of the scissor-like frame 2.

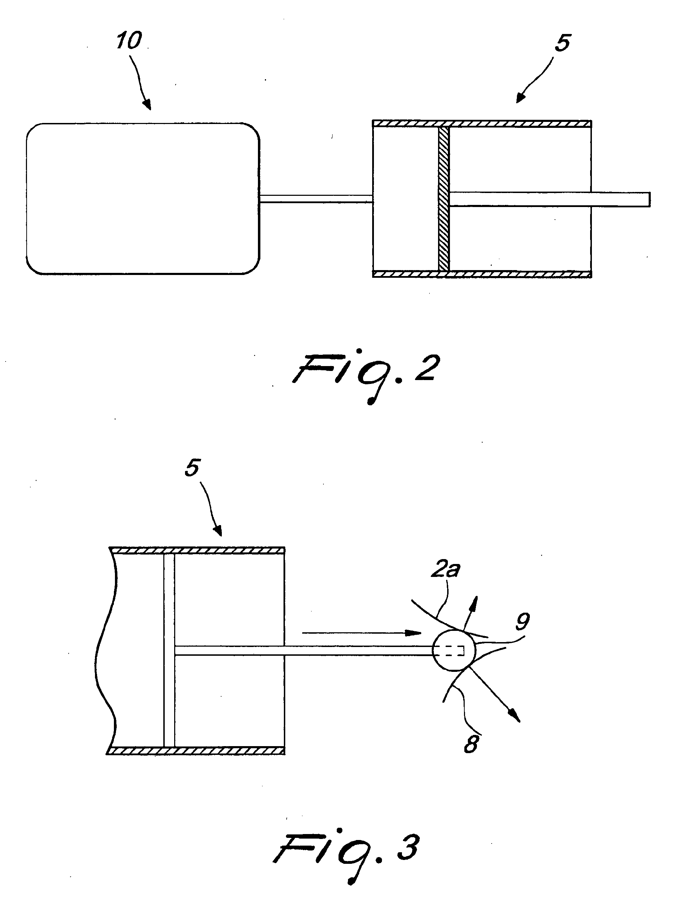

In this manner, the bearing 9 is wedged between the two profiles, and once the pneumatic actuator has been activated, it pushes both against the body 8 and against the rod 2a, as shown in Figure 3, causing the opening or closing of the scissor-like frame 2.

As regards feeding of the pneumatic actuator, supply means are provided which comprise, in addition to a suitable pneumatic system, also at least one auxiliary tank 10, which is connected to the actuator so as to ensure the pressure needed to lift the wheel 6.

More precisely, by using a double-acting actuator it is possible to fill the auxiliary tank 10 with the quantity of air needed to allow a plurality of consecutive lifting and lowering cycles.

As regards actuation of the actuator, actuation means are provided, not shown, which can be associated directly with a wheel balancing machine or with a tire removing machine.

Operation of the lifting device 1, particularly for lifting wheels of vehicles and the like, for wheel balancing and tire removing machines, is clearly desumable from the foregoing.

In particular, it must be stressed that by pressurizing the compressed air motor means 5 it is possible to "cancel out" the weight of the wheel 6 or of the object being lifted, allowing a lifting or lowering thereof in any position within the stroke of the lifting device 1.

More precisely, the outer profile of the cam-type profiled body 8, along the lifting stroke of the lifter, is such as to compensate exactly for the reduction in pressure caused by the expansion of the gas contained in the pneumatic actuator.

This balance is achieved as soon as the lifter moves from the initial low position.

This position is then kept in balance by the force of the piston according to rule (1) and the reaction force of the weight of the wheel 6 to be lifted, without introducing further air, throughout the stroke.

The force provided by the pneumatic actuator decreases, reducing the pressure and increasing the volume, and simultaneously the force transmitted by means of cams, which keeps the weight balanced, decreases equally.

In practice it has been found that the lifting device, particularly for lifting wheels of vehicles and the like, for wheel balancing machines and tire removing machines, according to the present invention, fully achieves the intended aim and objects, since it allows to move a wheel or any other object to be lifted, entailing minimal effort for the operator.

A further advantage of the lifting device according to the present invention consists in that it is simple to manufacture, entailing low costs.

Another advantage of the lifting device according to the present invention consists in that it can be integrated, at the power supply and management level, with an existing wheel balancing or tire removing machine.

The lifting device, particularly for lifting wheels of vehicles and the like, for wheel balancing machines and tire removing machines, thus conceived is susceptible of numerous modifications and variations, all of which are within the scope of the appended claims.

All the details may further be replaced with other technically equivalent elements.

In practice, the materials used, so long as they are compatible with the specific use, as well as the contingent shapes and dimensions, may be any according to requirements and to the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

**Claims**

1. A lifting device, particularly for lifting wheels of vehicles and the like, for wheel balancing and tire removing machines, comprising a scissor-like frame (2), which is interposed between at least two flat and mutually parallel elements (3, 4) for their mutual translational motion as a consequence of the action of motor means (5) functionally associated with said scissor-like frame (2), said motor means comprising at least one actuator, which is pivoted to one of said two flat and parallel elements (3, 4), its movable element being functionally engageable with cam-type profiled means (7) and with said scissor-like frame (2), said lifting device further comprising power supply means for supplying power to said motor means (5), **characterized in that** said actuator is pneumatic, said power supply means comprise at least one auxiliary tank (10) which is connected to said pneumatic actuator, whereby said cam-type profiled means can be engaged functionally with said motor means (5) for dynamic and static balancing between the thrust force generated by said motor means (5) and the contrast force of said scissor-like frame (2) in addition to the weight of an object (6) to be lifted in all the operating positions of the lifting device (1), said object (6) to be lifted being arranged above one of said two flat and parallel elements (3, 4), the lifting device further comprises at least one bearing (9), which is associated with said movable element and is slidingly in contact with the outer profile of a cam-type profiled body (8), which defines said cam-type profiled means (7), and simultaneously with a second profile formed by said scissor-like frame (2) for opening or closing it, , the outer profile of the cam-type profiled body (8), along the lifting/lowering stroke of the lifting device, being such as to compensate exactly for the reduction/increase in pressure caused by the expansion/compression of the gas contained in the pneumatic actuator.

2. The lifting device according to one or more of the preceding claims, **characterized in that** it comprises means for actuating said motor means and said power supply means.

3. The lifting device according to one or more of the preceding claims, **characterized in that** said actuation means can be associated with a wheel balancing or tire removing machine.

**Patentansprüche**

1. Eine Hebevorrichtung, insbesondere zum Anheben von Fahrzeugrädern und dergleichen, für Radauswuchtungs- und Reifendemontiermaschinen, die einen scherenartigen Rahmen (2) umfasst, welcher zwischen mindestens zwei flachen und zueinander parallelen Elementen (3, 4) zum Zwecke ihrer gegenseitigen Translationsbewegung infolge des Wirkens von Motormitteln (5) angeordnet ist, die funktionell mit dem scherenartigen Rahmen (2) verbunden sind, wobei die Motormittel mindestens einen Aktor umfassen, der gelenkig mit einem der beiden flachen und parallelen Elemente (3, 4) verbunden ist, wobei sein bewegliches Element funktionell in profilierte Mittel (7) vom Nockentyp und in den scherenartigen Rahmen (2) eingreifen kann, wobei die Hebevorrichtung weiter Stromversorgungsmittel zur Versorgung der Motormittel (5) mit Strom umfasst, **dadurch gekennzeichnet, dass** der Aktor pneumatisch ist, die Stromversorgungsmittel mindestens einen zusätzlichen Behälter (10) umfassen, welcher mit dem pneumatischen Aktor verbunden ist, wodurch die profilierten Mittel vom Nockentyp funktionell mit den Motormitteln (5) in Eingriff gebracht werden können für den dynamischen und statischen Ausgleich zwischen der von den Motormitteln (5) erzeugten Radialkraft und der Gegenkraft des scherenartigen Rahmens (2) zusätzlich zu dem Gewicht eines Gegenstands (6), der in allen Arbeitspositionen der Hebevorrichtung (1) anzuheben ist, wobei der anzuhebende Gegenstand (6) über einem der beiden flachen und parallelen Elemente (3, 4) angeordnet ist und die Hebevorrichtung weiter mindestens ein Lager (9) umfasst, das mit dem beweglichen Element verbunden ist und verschiebbar in Kontakt mit dem Außenprofil eines profilierten Körpers (8) vom Nockentyp steht, der die profilierten Mittel (7) vom Nockentyp bestimmt, und gleichzeitig mit einem zweiten Profil, das von dem scherenartigen Rahmen (2) gebildet wird, um ihn zu öffnen oder zu schließen, wobei das Außenprofil des profilierten Körpers (8) vom Nockentyp, entlang dem Hebehub/dem Senkhub der Hebevorrichtung, derart ist, dass es die Druckvariation genau ausgleicht, die durch die Expansion/Druck des Gases, das im pneumatischen Aktor enthalten ist, verursacht wird.

2. Die Hebevorrichtung gemäß einem oder mehreren der obigen Ansprüche, **dadurch gekennzeichnet, dass** sie Mittel zur Aktivierung der Motormittel und der Stromversorgungsmittel umfasst.

3. Die Hebevorrichtung gemäß einem oder mehreren der obigen Ansprüche, **dadurch gekennzeichnet, dass** die Aktivierungsmittel mit einer Radauswuchtungs- oder Reifendemontiermaschine verbunden sein können.

**EP 2 161 235 B1**

**Revendications**

1. Dispositif élévateur, en particulier pour soulever les roues de véhicules et analogues, pour machines d'équilibrage de roues et de démontage de pneumatiques, comportant un châssis en ciseaux (2), lequel est intercalé entre au moins deux éléments plats et parallèles l'un à l'autre (3, 4) pour leur mouvement de translation mutuel sous l'action d'un moyen formant moteur (5) coopérant avec ledit châssis en ciseaux (2), ledit moyen formant moteur comprenant au moins un vérin, lequel pivote sur l'un desdits deux éléments plats et parallèles (3, 4), son élément mobile pouvant être amené à coopérer avec un moyen profilé du type came (7) et avec ledit châssis en ciseaux (2), ledit dispositif élévateur comportant en outre un moyen d'alimentation en énergie pour fournir de l'énergie audit moyen formant moteur (5), **caractérisé en ce que** ledit vérin est pneumatique, ledit moyen d'alimentation en énergie comprend au moins un réservoir auxiliaire (10) relié audit vérin pneumatique, grâce à quoi ledit moyen profilé du type came peut être amené à coopérer avec ledit moyen formant moteur (5) pour un équilibrage dynamique et statique entre la force de poussée générée par ledit moyen formant moteur (5) et la force antagoniste dudit châssis en ciseaux (2) en plus du poids d'un objet (6) à soulever dans toutes les positions de fonctionnement du dispositif élévateur (1), ledit objet (6) à soulever étant placé au-dessus d'un desdits deux éléments plats et parallèles (3, 4), le dispositif élévateur comportant en outre au moins un palier (9), lequel est associé audit élément mobile et est au contact, à coulissement, du profil extérieur d'un corps profilé du type came (8), lequel définit ledit moyen profilé du type came (7), et simultanément d'un second profil formé par ledit châssis en ciseaux (2) pour ouvrir ou fermer celui-ci, le profil extérieur du corps profilé du type came (8), sur la course d'élévation/d'abaissement du dispositif élévateur, servant à compenser exactement la variation de pression provoquée par la détente/compression du gaz contenu dans le vérin pneumatique.

2. Dispositif élévateur selon la revendication 1, **caractérisé en ce qu'**il comporte des moyens pour actionner ledit moyen formant moteur et ledit moyen d'alimentation en énergie.

3. Dispositif élévateur selon l'une quelconque des revendications précédentes, **caractérisé en ce que** lesdits moyens d'actionnement peuvent être associés à une machine d'équilibrage de roues ou de démontage de pneumatiques.

Fig. 1

Fig.2

Fig.3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 846161 A